# EUROPÄISCHE PATENTANMELDUNG

(11) **EP 1 845 334 A1**
(43) Veröffentlichungstag der Anmeldung: **17.10.2007**
(21) Anmeldenummer: 07005354.1
(22) Anmeldetag: 15.03.2007
(51) Int. Cl.: G01B 11/02, G01C 3/08, G01S 7/481, G02B 27/09

(54) **Optischer Sensor**

(30) Priorität: 11.04.2006 DE 202006005876 U
(71) Anmelder: Leuze electronic GmbH + Co. KG, 73277 Owen/Teck (DE)
(72) Erfinder: Knauss, Karsten, 73095 Albershausen (DE); Margenfeld, Antje, 73230 Kirchheim/Teck (DE); Droemer, Jörg, 72574 Bad Urach-Wittlingen (DE)
(74) Vertreter: Ruckh, Rainer Gerhard

(57) **Zusammenfassung**

Der erfindungsgemäße optische Sensor (1) dient zur Erfassung von Objekten (2) in einem Überwachungsbereich und umfasst einen Sendelichtstrahlen (4) emittierenden Sender (4a) und einen Empfangslichtstrahlen (5) empfangenden Empfänger (6), bestehend aus einer zeilenförmigen Anordnung von Empfangselementen (6a). Dem Empfänger (6) ist eine Vorzugsrichtung aufweisende Empfangsoptik (8) vorgeordnet, mittels derer ein länglicher Empfangslichtfleck (5a) auf dem Empfänger (6) generiert wird. Die Längsachse des Empfangslichtflecks (5a) fällt mit der Längsachse des Empfängers (6) zusammen.

## Beschreibung

Die Erfindung betrifft einen optischen Sensor gemäß dem Oberbegriff des Anspruchs 1.

Ein derartiger optischer Sensor ist aus der DE 198 50 270 A1 bekannt. Dieser Sensor bildet einen nach dem Triangulationsprinzip arbeitenden Distanzsensor und weist einen Sendelichtstrahlen emittierenden Sender sowie einen Empfangslichtstrahlen empfangenden Empfänger auf. Der Empfänger ist von einer CCD-Zeile gebildet, die eine Linearanordnung von Empfangselementen aufweist. Der Empfänger liegt in einem vorgegebenen Abstand neben dem Sender. Die vom Sender emittierten Sendelichtstrahlen werden auf ein Objekt geführt und von dort als Empfangslichtstrahlen auf den Empfänger reflektiert. Die Lage des Empfangslichtflecks auf der CCD-Zeile liefert ein Maß für die Distanz des Objekts zum optischen Sensor. Zur Distanzbestimmung wird dabei der Schwerpunkt des Empfangslichtflecks auf der CCD-Zeile ermittelt und in einer Auswerteeinheit in einen Distanzwert umgerechnet.

Bei einem derartigen Auswerteverfahren ist es erforderlich, dass von den Empfangslichtstrahlen mehrere aufeinander folgende Empfangselemente belichtet werden. Aus den dadurch generierten Empfangssignalen an den Ausgängen der Empfangselemente kann dann die Verteilung des Empfangslichtflecks auf der CCD-Zeile ermittelt werden, wonach aus dieser Verteilung die Lage des Schwerpunkts des Empfangslichtflecks auf der CCD-Zeile als Maß für die Objektdistanz berechnet werden kann.

Um einen derart verbreiterten Empfangslichtfleck auf dem Empfänger zu erhalten, wird bei bekannten optischen Sensoren eine rotationssymmetrische Empfangsoptik zur Defokussierung der Empfangslichtstrahlen eingesetzt. Typischerweise ist eine derartige Empfangsoptik von einer Plankonvexlinse gebildet, die dem Empfänger vorgeordnet ist. Nachteilig hierbei ist jedoch, dass mit einer derartigen Empfangsoptik ein rotationssymmetrischer Empfangslichtfleck erzeugt wird, von welchem nur ein geringer Teil auf den Empfänger geführt wird. Da nur ein kleiner Teil der Empfangslichtmenge auf den Empfänger auf trifft und zur Objektdetektion genutzt werden kann, sind bei Objekten in großen Distanzen die Pegel der Empfangssignale an den Ausgängen der Empfangselemente nicht mehr groß genug um eine sichere Objektdetektion zu gewährleisten. Dies führt zu einer unerwünschten Begrenzung der maximalen Reichweite des optischen Sensors.

Der Erfindung liegt die Aufgabe zugrunde, einen optischen Sensor der eingangs genannten Art so auszubilden, dass mit diesem in einem möglichst großen Entfernungsbereich eine sichere und genaue Objektdetektion durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und umfasst einen Sendelichtstrahlen emittierenden Sender und einen Empfangslichtstrahlen empfangenden Empfänger, bestehend aus einer zeilenförmigen Anordnung von Empfangselementen. Dem Empfänger ist eine Vorzugsrichtung aufweisende Empfangsoptik vorgeordnet, mittels derer ein länglicher Empfangslichtfleck auf dem Empfänger generiert wird.
Die Längsachse des Empfangslichtflecks fällt mit der Längsachse des Empfängers zusammen.

Mit der erfindungsgemäßen Empfangsoptik wird einerseits eine Defokussierung der Empfangslichtstrahlen erzielt, so dass mit den Empfangslichtstrahlen mehrere aufeinander folgende Empfangselemente des Empfängers ausgeleuchtet werden. Andererseits wird dabei durch die Vorzugsrichtung der Empfangsoptik, die an die Orientierung der Längsachse des Empfängers angepasst, ist ein länglicher Empfangslichtfleck erzeugt, der nahezu vollständig auf den zeilenförmigen Empfänger auftrifft. Damit wird ein hoher Anteil des Empfangslichts auf den Empfänger fokussiert, wodurch hohe Pegel der Empfangssignale an den Ausgängen des Empfängers generiert werden. Dadurch können mit dem erfindungsgemäßen optischen Sensor auch Objekte in großen Entfernungen sicher detektiert werden.

Die erfindungsgemäße Empfangsoptik ist hierzu bevorzugt von einer Linse mit einer astigmatischen Abbildung, insbesondere von einer toroidalen Linse, gebildet. Alternativ können zur Erzielung der gewünschten optischen Eigenschaften die Grenzflächen der Empfangsoptik auch als Freiformflächen ausgebildet sein. Zur Erzielung der gewünschten Strahlformung der Empfangslichtstrahlen reicht somit ein einzelnes Optikelement aus, welches zudem kostengünstig herstellbar ist.

Durch die mit der Empfangsoptik erzielte Defokussierung der Empfangslichtstrahlen in Längsrichtung des Empfängers ist gewährleistet, dass unabhängig von der Objektdistanz der Empfangslichtfleck auf dem Empfänger mehrere, vorzugsweise wenigstens drei aufeinander folgende Empfangselemente ausleuchtet. Die Empfangssignale dieser Empfangselemente können zu einer hochgenauen Objektdetektion, insbesondere bei einem als Distanzsensor ausgebildeten optischen Sensor, zu einer hochgenauen Distanzmessung verwendet werden.

Bei der Distanzbestimmung von Objekten wird die Lage des Empfangslichtflecks auf dem zeilenförmigen Empfänger als Maß für die Objektdistanz ausgewertet. Zur Bestimmung der Objektdistanz wird das Maximum der Verteilung des Empfangslichtflecks oder besonders vorteilhaft der Schwerpunkt der Verteilung des Empfangslichtflecks auf dem Empfänger bestimmt.

Da durch die erfindungsgemäße Empfangsoptik ein länglicher Empfangslichtfleck auf dem Empfänger generiert wird, werden von diesem mehrere Empfangselemente ausgeleuchtet, so dass deren Empfangssignale einen genauen Intensitäts-Verlauf des Empfangslichtflecks ergeben, aus dem das Maximum oder der Schwerpunkt der Verteilung mit hoher Genauigkeit ermittelt werden kann. Diese Genauigkeit kann durch eine Subpixelauflösung erheblich erhöht werden. Bei einer derartigen Subpixelauflösung werden zwischen jeweils benachbarten Empfangselementen äquidistante Stützstellen definiert. Für jede der Stützstellen wird durch Interpolation der Empfangssignale der zwei benachbarten Empfangselemente ein rechnerischer Empfangssignalwert bestimmt. Durch diese Berechnung zusätzlicher Empfangssignalwerte an den Stützstellen kann der Intensitätsverlauf des Empfangslichtflecks auf dem Empfänger mit hoher Genauigkeit bestimmt werden. Entsprechend erhöht ist die Genauigkeit des Maximums oder Schwerpunkts des Empfangslichtflecks, welcher zur Bestimmung des Distanzwerts herangezogen wird.

Die Erfindung wird im Nachstehenden anhand der Zeichnungen erläutert. Es zeigen:
- Figur 1:: Schematische Darstellung eines optischen Sensors.
- Figur 2:: Schematische Darstellung des Empfängers des optischen Sensors gemäß Figur 1 mit einer zeilenförmigen Anordnung von Empfangselementen und einem auf diesen auftreffenden Empfangslichtfleck.
- Figur 3:: Verlauf der Empfangssignale an den Ausgängen der Empfangselemente des Empfängers gemäß Figur 2.

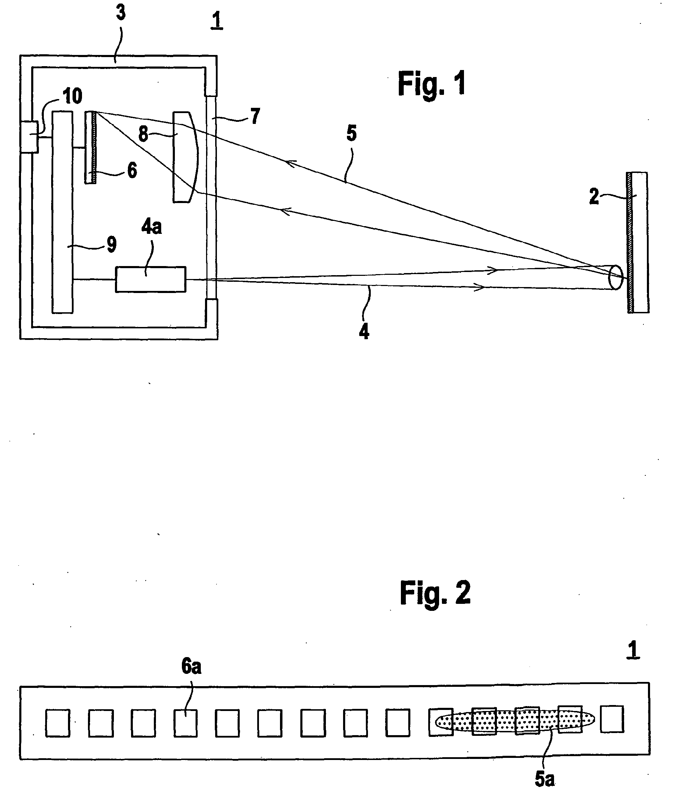

Figur 1 zeigt schematisch den Aufbau eines optischen Sensors 1 zur Erfassung von Objekten 2 in einem Überwachungsbereich. Der optische Sensor 1 ist als Distanzsensor ausgebildet, wobei die Distanzbestimmung von Objekten 2 nach dem Triangulationsprinzip erfolgt. Der optische Sensor 1 ist in einem Gehäuse 3 integriert und weist einen Sendelichtstrahlen 4 emittierenden Sender 4a und einen Empfangslichtstrahlen 5 empfangenden Empfänger 6 auf. Der Sender 4a ist von einer Leuchtdiode oder einer Laserdiode gebildet. Der Empfänger 6 ist in Form einer Empfängerzeile ausgebildet, das heißt, er besteht aus einer zeilenförmigen Anordnung von Empfangselementen 6a. Figur 2 zeigt beispielhaft den Aufbau einer derartigen Empfängerzeile. Die Empfängerzeile kann von einer CCD-Zeile oder einer CMOS-Zeile gebildet sein. Weiterhin kann der Empfänger 6 aus einer Anordnung von diskreten Empfangselementen 6a gebildet sein. Die Empfängerzeile gemäß Figur 2 weist zwölf diskrete Empfangselemente 6a auf. Für den Fall, dass die Empfängerzeile von einer CCD-Zeile oder einer CMOS-Zeile gebildet ist, kann diese erheblich mehr Empfangselemente 6a aufweisen.

Die vom Sender 4a emittierten Sendelichtstrahlen 4 werden durch ein Austrittsfenster 7 in der Frontwand des Gehäuses 3 in den Überwachungsbereich geführt. Die auf ein Objekt 2 auftreffenden Sendelichtstrahlen 4 werden an diesem reflektiert und gelangen als Empfangslichtstrahlen 5 zurück zum optischen Sensor 1. Die Empfangslichtstrahlen 5 durchsetzen dabei das Austrittsfenster 7 und werden über eine Empfangsoptik 8 auf den Empfänger 6 geführt. Zur Strahlformung der Sendelichtstrahlen 4 kann dem Sender 4a zudem eine in Figur 1 nicht dargstellte Sendeoptik nachgeordnet sein.

Der Sender 4a und der Empfänger 6 sind an eine Auswerteeinheit 9 angeschlossen, die von einem Mikroprozessor oder dergleichen gebildet ist. Die Auswerteeinheit 9 dient einerseits zur Ansteuerung des Senders 4a und andererseits zur Auswertung der an den Ausgängen 10 der Empfangselemente 6a des Empfängers 6 anstehenden Empfangssignalen. In der Auswerteeinheit 9 wird aus den Empfangssignalen ein Distanzwert ermittelt, der die Distanz des Objekts 2 zum optischen Sensor 1 angibt. Dieser Distanzwert wird über einen Ausgang 10 ausgegeben.

Wie aus Figur 1 ersichtlich, liegt der Empfänger 6 um einen definierten Basisabstand seitlich versetzt zum Sender 4a, wobei die Längsachse der Empfängerzeile senkrecht zur Strahlachse der Sendelichtstrahlen 4 verläuft. Bei dem nach dem Triangulationsprinzip arbeitenden optischen Sensor 1 wird der Auftreffpunkt der Empfangslichtstrahlen 5 auf dem Empfänger 6, das heißt, die Lage des Empfangslichtflecks auf dem Empfänger 6 als Maß für die Objektdistanz ausgewertet.

Die Empfangsoptik 8, welche dem Empfänger 6 vorgeordnet ist, ist nicht rotationssymmetrisch ausgebildet, sondern weist eine in Längsrichtung der Empfängerzeile verlaufende Vorzugsrichtung auf. Dadurch erfolgt bei Durchgang der Empfangslichtstrahlen 5 durch die Empfangsoptik 8 eine Strahlformung derart, dass ein länglicher, elliptischer Empfangslichtfleck 5a auf der Empfängerzeile abgebildet wird. Die Form und Orientierung des durch die Empfangsoptik 8 gemäß Figur 1 generierten Empfangslichtfleck 5a auf der Empfängerzeile ist in Figur 2 dargestellt. Die Empfangsoptik 8 ist mit ihrer Vorzugsrichtung in Bezug auf den Empfänger 6 so ausgerichtet, dass ein schmaler, langgestreckter elliptischer Empfangslichtfleck 5a entsteht, dessen Längsachse mit der Längsachse der Empfängerzeile zusammenfällt. Wie aus Figur 2 ersichtlich, wird durch die Strahlformung mit der Empfangsoptik 8 erreicht, dass nahezu die gesamte Empfangslichtmenge auf den Empfänger 6 geführt wird. Dabei wirkt die Empfangsoptik 8 defokussierend, so dass mit den Empfangslichtstrahlen 5 nicht nur ein Empfangselement 6a, sondern mehrere Empfangselemente 6a belichtet werden. Bei der Ausführungsform gemäß Figur 2 werden insgesamt vier Empfangselemente 6a der Empfängerzeile mit dem Empfangslichtfleck 5a belichtet. Insbesondere bei Empfängern 6, die als CCD-Zeilen oder CMOS-Zeilen ausgebildet sind, kann mit dem Empfangslichtfleck 5a auch eine größere Anzahl von Empfangselementen 6a ausgeleuchtet werden.

Die Empfangsoptik 8 ist bevorzugt von einer Linse mit einer astigmatischen Abbildung gebildet. Insbesondere kann die Empfangsoptik 8 von einer toroidalen Linse gebildet sein. Derartige Linsen weisen allgemein einen rotationssymmetrischen sowie einen zylindrischen Anteil auf.

Zur Bestimmung der Objektdistanz wird die Lage des Empfangslichtflecks 5a auf der Empfängerzeile ausgewertet. Im vorliegenden Fall wird als Maß für die Objektdistanz der Schwerpunkt des Empfangslichtflecks 5a auf der Empfängerzeile bestimmt.

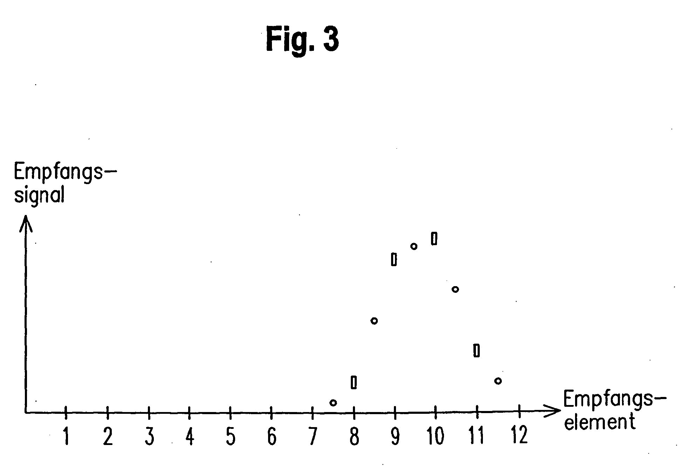

Die Lagebestimmung des Empfangslichtflecks 5a ist in Figur 3 veranschaulicht. Dort sind schematisch die Amplituden der Empfangssignale an den Ausgängen der zwölf Empfangselemente 6a für den in Figur 2 dargestellten Empfangslichtflecke auf der Empfängerzeile aufgetragen. Die Amplitudenwerte an den einzelnen Empfangselementen 6a sind mit Rechtecken in Figur 3 eingetragen. Je stärker ein Empfangselement 6a von dem Empfangslichtfleck 5a belichtet ist, desto größer ist dessen Empfangssignal. Demzufolge werden an den Empfangselementen 9 und 10 die höchsten Empfangssignale erhalten, da dort das Zentrum des Empfangslichtflecks 5a liegt. Dabei ist das Empfangssignal des zehnten Empfangselements 6a geringfügig höher als das Empfangselement 6a des neunten Empfangselements 6a. Die Empfangssignale des achten und elften Empfangselements 6a weisen niedrige Werte auf, da diese im Randbereich des Empfangslichtflecks 5a liegen. Dabei ist das Empfangssignal des elften Empfangselements 6a höher als das Empfangssignal des achten Empfangselements 6a. Die restlichen Empfangselemente 6a sind nicht belichtet, so dass deren Empfangssignale zumindest näherungsweise den Amplitudenwert null annehmen.

Zur genauen Bestimmung des Schwerpunkts der Verteilung der durch den Empfangslichtfleck 5a generierten Empfangssignale wird eine Subpixelauswertung durchgeführt. In Figur 3 ist die einfachste Form einer Subpixelauswertung schematisch dargestellt.

Jeweils zwischen zwei benachbarten Empfangselementen 6a wird eine Stützstelle definiert, die im vorliegenden Fall exakt zwischen den benachbarten Empfangselementen 6a liegt. Jeder Stützstelle wird durch Interpolation der Werte der Empfangssignale der benachbarten Empfangselemente 6a ein rechnerischer Empfangssignalwert zugewiesen. Die rechnerischen Empfangssignale für die einzelnen Stützstellen sind in Figur 3 mit Punkten eingetragen. Der jeweilige Empfangssignalwert an einer Stützstelle entspricht dem arithmetischen Mittelwert der Empfangssignale der angrenzenden Empfangselemente 6a. Bei komplexen Subpixelauswertungen kann eine höhere Anzahl von Stützstellen vorgesehen sein. Weiterhin kann der Empfangssignalverlauf durch Ausgleichsfunktionen angenähert werden. Generell wird durch die Subpixelauswertung ein detaillierter Verlauf der Empfangssignale erhalten, der eine genauere Berechnung des Schwerpunkts des Empfangslichtflecks 5a ermöglicht. Im vorliegenden Fall liefert diese Berechnung das Ergebnis, dass der Schwerpunkt des Empfangslichtflecks 5a zwischen dem neunten und zehnten Empfangselement 6a liegt. Ohne eine derartige Subpixelauflösung hätte die Auswertung ergeben, dass die Lage des Zentrums des Empfangslichtflecks 5a beim zehnten Empfangselement 6a liegt, welches den höchsten Empfangssignalwert liefert.

### Bezugszeichenliste

- (1): Optischer Sensor
- (2): Objekt
- (3): Gehäuse
- (4): Sendelichtstrahlen
- (4a): Sender
- (5): Empfangslichtstrahlen
- (5a): Empfangslichtfleck
- (6): Empfänger
- (6a): Empfangselement
- (7): Austrittsfenster
- (8): Empfangsoptik
- (9): Auswerteeinheit
- (10): Ausgang

## Patentansprüche

1. Optischer Sensor zur Erfassung von Objekten in einem Überwachungsbereich mit einem Sendelichtstrahlen emittierenden Sender und einem Empfangslichtstrahlen empfangenden Empfänger bestehend aus einer zeilenförmigen Anordnung von Empfangselementen, **dadurch gekennzeichnet, dass** dem Empfänger (6) eine Vorzugsrichtung aufweisende Empfangsoptik (8) vorgeordnet ist, mittels derer ein länglicher Empfangslichtfleck auf dem Empfänger (6) generiert wird, wobei die Längsachse des Empfangslichtflecks mit der Längsachse des Empfängers (6) zusammenfällt.

2. Optischer Sensor nach Anspruch 1, **dadurch gekennzeichnet, dass** dieser als nach dem Triangulationsprinzip arbeitender Distanzsensor ausgebildet ist.

3. Optischer Sensor nach einem der Ansprüche 1 oder 2, **dadurch gekennzeichnet, dass** die Empfangsoptik (8) von einer Linse mit einer astigmatischen Abbildung gebildet ist.

4. Optischer Sensor nach Anspruch 3, **dadurch gekennzeichnet, dass** die Empfangsoptik (8) von einer toroidalen Linse ausgebildet ist.

5. Optischer Sensor nach Anspruch 3, **dadurch gekennzeichnet, dass** die Grenzflächen der Empfangsoptik (8) zumindest teilweise als Freiformflächen ausgebildet sind.

6. Optischer Sensor nach einem der Ansprüche 1 bis 5, **dadurch gekennzeichnet, dass** mit dem Empfangslichtfleck mehrere aufeinander folgende Empfangselemente (6a) des Empfängers (6) ausgeleuchtet sind.

7. Optischer Sensor nach Anspruch 6, **dadurch gekennzeichnet, dass** mit dem Empfangslichtfleck wenigstens drei aufeinander folgende Empfangselemente (6a) ausgeleuchtet sind.

8. Optischer Sensor nach einem der Ansprüche 1 bis 7, **dadurch gekennzeichnet, dass** der Empfänger (6) von einer CCD-Zeile gebildet ist.

9. Optischer Sensor nach einem der Ansprüche 1 bis 7, **dadurch gekennzeichnet, dass** der Empfänger (6) von einer CMOS-Zeile gebildet ist.

10. Optischer Sensor nach einem der Ansprüche 1 bis 7, **dadurch gekennzeichnet, dass** der Empfänger (6) von einer Folge diskreter Empfangselemente (6a) gebildet ist.

11. Optischer Sensor nach einem der Ansprüche 1 bis 10, **dadurch gekennzeichnet, dass** zur Bestimmung der Distanz eines Objektes (2) in einer Auswerteeinheit (9) der Verlauf der Amplituden der Empfangssignale an den Ausgängen (10) der Empfangselemente (6a) ausgewertet wird.

12. Optischer Sensor nach Anspruch 11, **dadurch gekennzeichnet, dass** zur Erhöhung der Genauigkeit der Distanzmessung in der Auswerteeinheit (9) eine Interpolation der Amplituden von benachbarten Empfangselementen (6a) erfolgt.
